**Europäisches Patentamt**

(19) **European Patent Office**

**Office européen des brevets**

(11) Numéro de publication : **0 149 586**
**B1**

(12) **FASCICULE DE BREVET EUROPÉEN**

(45) Date de publication du fascicule du brevet :
28.09.88

(51) Int. Cl.⁴ : **B 29 C 45/03**, B 29 C 45/46,
B 29 C 45/53

(21) Numéro de dépôt : **85450001.4**

(22) Date de dépôt : **14.01.85**

(54) **Procédé de moulage par injection, à froid, de matériaux composites thermodurcissables et dispositif pour sa mise en oeuvre.**

(30) Priorité : **13.01.84 FR 8400617**

(43) Date de publication de la demande :
**24.07.85 Bulletin 85/30**

(45) Mention de la délivrance du brevet :
**28.09.88 Bulletin 88/39**

(84) Etats contractants désignés :
**AT BE CH DE FR GB IT LI LU NL SE**

(56) Documents cités :
**DE-A- 2 405 776**
**FR-A- 1 367 378**
**GB-A-   541 050**
**US-A- 2 396 348**
**US-A- 3 746 315**
**JAPAN PLASTICS AGE, vol. 11, Nr. 5, mai 1973, pages 18-20, Tokyo, JP; ITARU AMANO: "BMC injection moiding machine, TOTAL SYSTEM"**

(73) Titulaire : **Sorine, Emile**
**9 rue Arnaud de Pins**
**F-33430 Bazas (FR)**

(72) Inventeur : **Sorine, Emile**
**9 rue Arnaud de Pins**
**F-33430 Bazas (FR)**

(74) Mandataire : **Puit, Thierry et al**
**Centre de Recherches de Pont-à-Mousson Service de Propriété Industrielle Boîte Postale 109**
**F-54704 Pont-à-Mousson Cédex (FR)**

## Description

La présente invention concerne un procédé de moulage par injection, à froid, de matériaux composites thermodurcissables selon le préambule de la revendication 1, dont le liant est constitué par une résine polyester, phénolique ou époxy et un dispositif pour la mise en œuvre de ce procédé selon le préambule de la revendication 3.

Actuellement l'injection de grandes pièces avec des matériaux composites à liant de résines thermodurcissables, communément dénommés BMC (Bulk Moulding Compounds), fait appel aux techniques traditionnelles issues du moulage par compression à chaud des thermodurcissables ou du moulage par injection des thermoplastiques.

Mises à part diverses améliorations concernant principalement les équipements périphériques, ces techniques utilisent toujours la phase de fluidification sous l'action de la chaleur de ces matériaux, pour procéder à leur injection sous pression dans un moule fermé.

Si, dans le cas des matériaux thermoplastiques, ce principe de moulage conserve toute sa valeur, dans le cas des thermodurcissables chargés, il présente des inconvénients importants, liés à leur cycle de transformation irréversible.

En effet, ce cycle consiste en la succession des phases suivantes : apport de chaleur, fluidification, injection, durcissement, les deux premières phases s'effectuant en amont du moule et les deux phases suivantes au niveau du moule.

Afin d'augmenter la cadence de moulage, la phase d'injection est effectuée aussi près que possible de la phase de durcissement avec comme corollaire l'augmentation du risque de durcissement anarchique du matériau, durant le remplissage du moule ou en amont dans l'appareillage d'injection.

Il convient donc de procéder à l'injection dans le temps le plus court, ce qui implique une vitesse d'injection élevée, une forte pression et une grande vitesse d'écoulement aux travers de canaux à faibles sections. Les renforts fibreux du matériau composite se trouvent dégradés au cours d'un tel processus.

Le document US-A-3.746.315 concerne un procédé d'injection de BMC qui, contrairement aux techniques habituelles, réalise une injection, à froid, des constituants malaxés, dans un moule chauffé. Cependant, ce procédé met en œuvre les techniques ordinaires de malaxage et d'injection sous pression élevée, lesquelles ont comme inconvénients notamment un risque majeur d'endommagement des fibres de renfort.

Le but de l'invention est de palier les inconvénients de cette dernière technique.

A cet effet, l'invention a pour objet un procédé de moulage par injection, à froid, de matériaux composites thermodurcissables, consistant, successivement et sans temps-mort entre les différentes phases, à introduire et malaxer les divers constituants du matériau à injecter, à introduire le mélange obtenu, dès la fin du malaxage et directement, de la zone de malaxage dans l'unité d'injection, puis à injecter ledit mélange, à la température à laquelle il se trouve, dans un moule chauffé par l'intermédiaire d'une filière, caractérisé en ce que la filière est de section allongée et de relativement faible hauteur de façon à délivrer dans le plan de joint du moule une nappe ayant une épaisseur et une largeur atteignant celles de la pièce à mouler et en ce qu'en fin d'injection la nappe de matière est sectionnée au droit de la filière et au droit de l'orifice d'injection dans le moule.

L'invention a aussi pour objet un dispositif pour la mise en œuvre du procédé de moulage par injection, à froid, de matériaux composites thermodurcissables comme décrit ci-dessus, comprenant une unité d'injection (4, 26) de matériau composite thermodurcissable, une unité (1, 21) de malaxage dudit matériau dont l'orifice de délivrance du matériau malaxé est relié directement à l'orifice d'alimentation de l'unité d'injection, et une filière (13, 31) d'injection du matériau dans la cavité d'un moule chauffé (17, 32), caractérisé en ce que la filière (13, 31) est conformée de manière à délivrer au droit de l'orifice de ladite cavité dans le plan de joint du moule, une nappe de matière de forme allongée dont l'épaisseur et la largeur sont égales à celles de la pièce à mouler, la filière (13, 31) et le moule (17, 32) étant munis de lames-guillotines (15, 18 ; 34, 37) de sectionnement de ladite nappe en fin d'injection.

L'utilisation, conformément à l'invention, d'une filière délivrant dans le plan de joint du moule une nappe susceptible d'avoir une épaisseur atteignant l'épaisseur de la pièce à mouler et une largeur atteignant celle de ladite pièce, permet de réduire la pression d'injection à quelques dizaines de Kg/cm² au lieu des pressions habituelles de l'ordre de 1000 à 2000 Kg/cm² avec une buse d'injection traditionnelle. Ainsi, c'est toute la conception et l'architecture de la presse et du moule qui s'allègent et deviennent sensiblement moins coûteuses.

D'autres caractéristiques et avantages ressortiront de la description qui va suivre de modes de réalisation d'appareillages destinés à la mise en œuvre du procédé de l'invention, description donnée à titre d'exemple uniquement et en regard des dessins annexés sur lesquels :

- La figure 1 représente schématiquement une vue en coupe verticale longitudinale d'une unité d'injection à laquelle sont associés un malaxeur et une filière conformes à l'invention,
- La figure 2 représente une vue de dessus de l'extrémité du dispositif de la figure 1, côté filière,
- La figure 3 représente une vue en coupe axiale d'un autre mode de réalisation d'une unité d'injection pour la mise en œuvre du procédé de l'invention, et
- La figure 4 est une vue en coupe transversale suivant la ligne IV-IV de l'unité de la figure 3 complétée par le dispositif de malaxage associé.

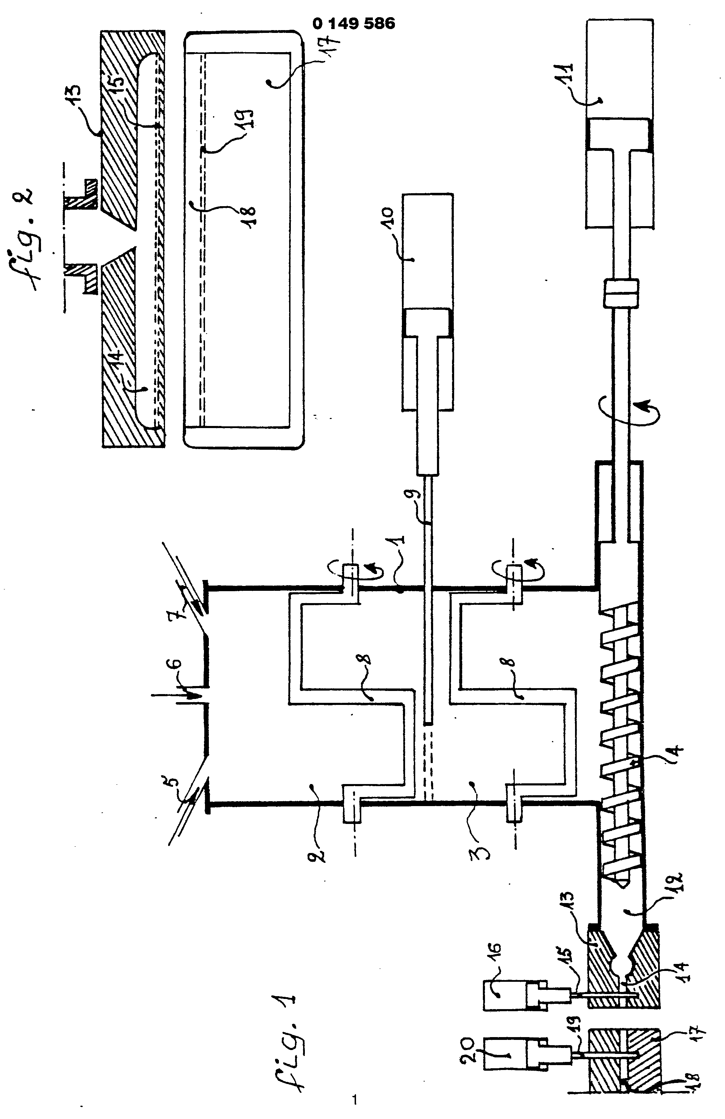

Le mode de réalisation schématisé sur la figure 1 comprend un malaxeur 1 à deux étages superposés 2 et 3, communiquant à sa partie inférieure avec l'intérieur du fourreau d'une vis-piston 4 d'une machine d'injection sous pression de type classique.

L'étage supérieur 2 du malaxeur est muni de conduits 5, 6, 7 d'introduction des divers composants du matériau thermodurcissable, à savoir des charges minérales, des résines et adjuvants et des charges fibreuses (notamment fibres de verre).

Les deux étages 2 et 3 comportent chacun un arbre horizontal 8 de malaxage entraîné en rotation par des moyens appropriés et sont séparés par une cloison horizontale 9 escamotable à l'aide d'un vérin hydraulique ou pneumatique 10.

La vis-piston 4 est, à la manière bien connue, montée mobile en translation horizontale dans son fourreau à l'aide d'un vérin hydraulique 11 ainsi qu'en rotation par des moyens appropriés non représentés.

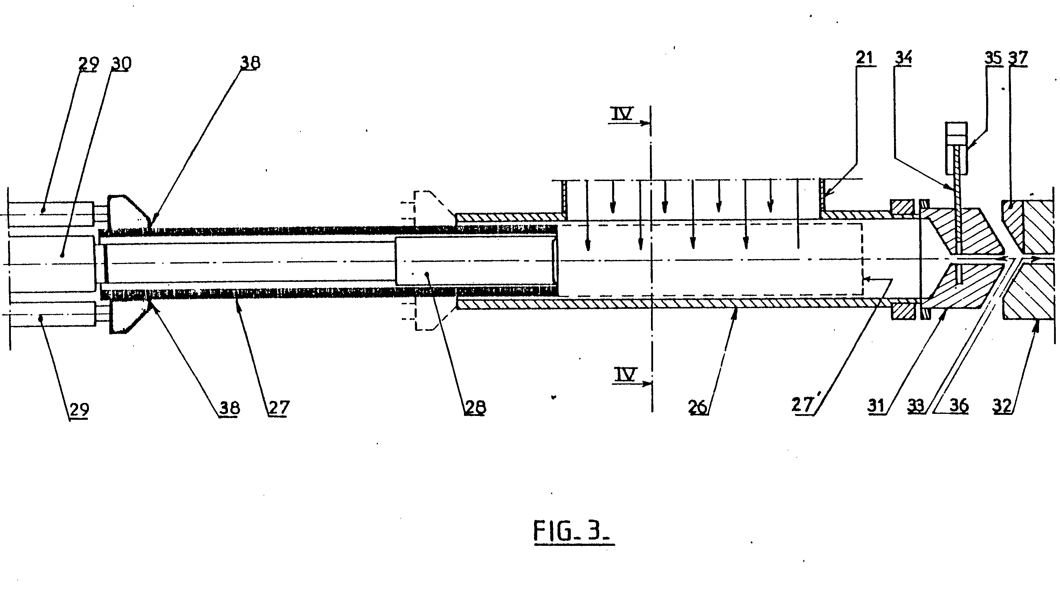

A l'avant de la vis-piston 4, la chambre d'injection 12 communique avec l'orifice d'une filière 13 dont le canal d'injection 14, obturable par une lame-guillotine 15 mue par un vérin hydraulique 16, présente une section qui va en s'élargissant (figure 2) de manière qu'à l'extrémité de la filière soit délivrée une nappe de section allongée, de faible épaisseur et relativement large.

L'orifice d'injection de la filière 13 est appliqué au cours de l'injection dans le plan de joint du moule symbolisé en 17, en regard de l'orifice d'injection. On peut ainsi, en conformant en conséquence la filière 13, injecter dans le moule 17 une nappe de matière dont l'épaisseur peut atteindre la hauteur de la cavité de moulage 18, c'est-à-dire l'épaisseur de la pièce à mouler, et dont la largeur peut atteindre la largeur de ladite cavité 18, c'est-à-dire la largeur de la pièce.

La section de la nappe peut être rectangulaire ou avoir un contour variable épousant la section de la pièce à mouler.

Une lame-guillotine 19 mue par un vérin hydraulique 20 est susceptible d'obturer l'entrée de la cavité de moulage 18.

Pendant la phase d'approvisionnement en composants primaires la cloison 9 isole la partie supérieure 2 du malaxeur de la partie inférieure, afin d'éviter de charger la vis-piston d'un mélange non homogène et de constituer une réserve assurant un fonctionnement en continu.

Les constituants (nature et proportions) sont ceux habituellement utilisés pour l'obtention des matériaux composites thermodurcissables connus.

La phase de pré-malaxage étant terminée la cloison 9 est escamotée hors du malaxeur 1 afin d'approvisionner l'étage inférieur 3.

Cet étage inférieur charge par bourrage la vis-piston 4 qui est entraînée en rotation.

Le matériau composite est envoyé sous pression dans la chambre 12. La lame-guillotine 15 étant abaissée le volume de matière de la chambre augmente et fait reculer la vis-piston 4.

Pour opérer l'injection on applique le moule 17 contre la filière 13 comme schématisé sur le dessin et les lames-guillotines 15 et 19 (qui sont synchronisées) sont relevées.

Le vérin 11 repousse la vis-piston 4 et force le matériau de la chambre 12 à remplir la cavité 18 du moule.

Dès la fin de l'injection les lames-guillotines 15 et 19 sont rabaissées pour sectionner la nappe d'injection.

La chambre 12 est de nouveau isolée et le cycle remplissage-injection peut recommencer aussitôt.

Le moule 17 est chauffé par des moyens classiques (chauffage individuel ou défilement des moules dans une enceinte chauffante en cas de moules multiples) afin d'apporter au matériau injecté la chaleur nécessaire au durcissement.

Il n'est donc plus nécessaire de prévoir le chauffage de l'unité d'injection comme il était nécessaire de le faire jusqu'à maintenant avec les techniques d'injection connues.

Du fait des dimensions importantes de la nappe d'injection la pression d'injection est de l'ordre de 20 à 100 Kg/cm$^2$ au lieu des pressions habituelles de l'ordre de 1000 à 2000 Kg/cm$^2$.

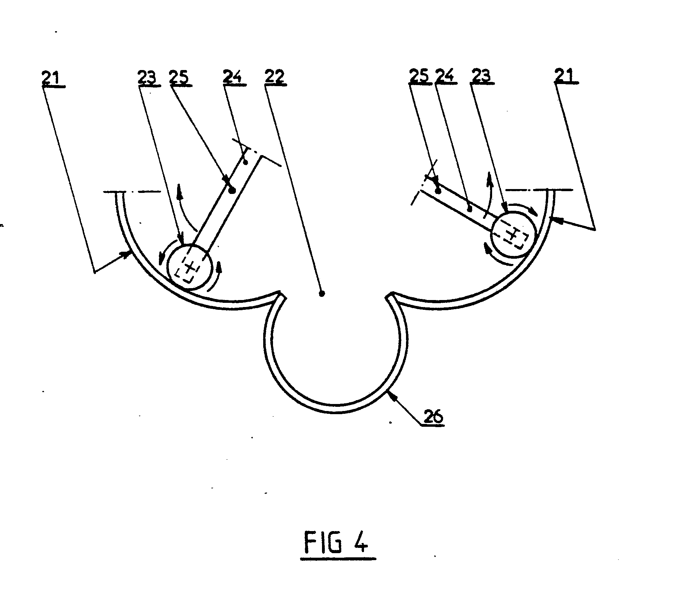

Les figures 3 et 4 illustrent un autre mode de réalisation permettant d'améliorer encore les performances du produit fini par rapport à la mise en œuvre illustrée par la figure 1.

Dans le mode de réalisation illustré par cette figure 1 en effet l'utilisation d'une vis-piston risque d'entraîner des effets de broyage des fibres, en particulier des fibres de verre et, par suite, une dégradation sensible des caractéristiques mécaniques du produit fini.

Pour illustrer ce risque de dégradation on rappellera que dans le cas d'une pièce moulée en complexe verre/polyester, pour un dosage pondéral des constituants par exemple de 1/3 de résine, 1/3 de fibres de verre et 1/3 de charges minérales et en choisissant empiriquement la résistance à la flexion comme point de comparaison, on constate pour un échantillon réalisé par injection d'un BMC une résistance R de l'ordre de 1000 Kg/cm$^2$, alors que pour un échantillon de même composition réalisé par compression à chaud d'un BMC, R est de l'ordre de 1500 Kg/cm$^2$ et que pour un échantillon, toujours de même composition mais réalisé selon la technique des SMC (Sheet Moulding Compounds), c'est-à-dire par compression à chaud de fibres pré-imprégnées, R est très sensiblement supérieur, de l'ordre de 2100 Kg/cm$^2$.

Seules les modifications subies par la fibre de verre durant l'élaboration du mélange puis son transfert dans l'enceinte du moule semblent pouvoir expliquer une telle dégradation des caractéristiques mécaniques du produit fini.

Aussi, afin de pallier de tels risques et préférentiellement le procédé de l'invention est mis en œuvre à l'aide du dispositif représenté sur lesdites figures 3 et 4.

Ce dispositif est constitué d'une enceinte de malaxage 21 en forme d'auge à fond ouvert dans sa partie centrale en 22 et dont les parois de part et d'autre de ladite ouverture 22 (de forme rectangulaire) sont cylindriques de façon à recevoir à l'intérieur de l'enceinte 21 deux rouleaux de malaxage 23 montés fous et d'axe parallèle à l'axe longitudinal de l'ouverture 22. Les rouleaux 23 sont en contact avec lesdites parties cylindriques de l'enceinte 21 et montés à l'extrémité de bras 24 eux-mêmes montés rotatifs autour d'axes 25 confondus avec les axes desdites parties cylindriques. Les moyens d'entraînement des bras 24 (non représentés sur la figure 4) sont ceux habituellement utilisés (exemple : moto-réducteur électrique).

L'enceinte de malaxage 21 est surmontée d'un pré-malaxeur ou mélangeur (non représenté) en forme de trémie recevant les divers ingrédients à mélanger, ceux-ci subissant un brassage avant leur introduction dans l'enceinte de malaxage 21.

L'orifice 22 communique avec l'intérieur d'un cylindre creux 26 d'injection à l'intérieur duquel sont susceptibles de se déplacer un fourreau 27 et un piston d'injection 28 intérieur au fourreau.

Le fourreau 27 a une faible épaisseur et est en contact glissant avec la paroi interne du cylindre 26. Il est déplacé par deux vérins hydrauliques 29 montés fixes, cependant que le piston 28 est mû par un vérin hydraulique 30 également monté fixe.

L'ensemble 21-26 est monté mobile en translation axialement au cylindre 26 afin d'amener une filière d'injection 31 fixée à l'extrémité du cylindre 26 contre l'orifice d'un moule chauffé schématisé en 32.

La filière 31 comporte un nez en biseau muni à son extrémité d'un orifice d'injection 33 délivrant une nappe de section par exemple rectangulaire, de faible épaisseur et relativement large. Une lame-guillotine 34 mue par exemple par un vérin 35 est chargée de sectionner la nappe injectée au droit de la filière à la fin de l'injection.

Le moule 32 est par exemple un moule destiné à travailler selon la méthode bien connue d'injection-compression. Ce moule est monté fixe et son orifice d'injection 36 correspond aux dimensions de l'orifice 33. Le moule 32 comprend à la manière habituelle un dispositif de guillotine schématisé en 37 et chargé de sectionner la nappe d'injection en fin d'injection.

Après un certain temps de malaxage dans l'enceinte 21, fonction de la nature des ingrédients utilisés, le fourreau 27 qui se trouvait bien entendu en position 27' (figure 3) d'obturation de l'ouverture 22, est amené en position de retrait pour permettre le remplissage de l'intérieur du cylindre 26. Puis le fourreau 27 est ramené en position 27', cependant que les vérins 29 poursuivent leur action afin de pousser par des butées 38 prenant appui contre l'extrémité du cylindre 26, l'ensemble 21-26-31 contre le moule 32 en l'y appliquant fermement le temps de l'injection. Le piston 28 est alors mis en mouvement pour pousser le contenu du cylindre 26 vers la filière 31 puis le moule 32.

En fin d'injection les guillotines 34, 37 sont actionnées, le piston 28 ramené en position initiale, et l'ensemble 21-26-31 ramené dans la position de la figure 3 (le fourreau étant soit en position 27' si le mélange dans l'enceinte 21 n'est pas encore dans les conditions requises, soit en position de retrait). Après l'actionnement des guillotines on peut procéder à l'opération de compression du moule 32.

Le dispositif de malaxage schématisé sur la figure 4 fait subir aux fibres de verre ou autres le minimum de contraintes tout en assurant une imprégnation satisfaisante pour la résine, l'action sur le mélange des rouleaux 23 coopérant avec l'enceinte cylindrique 21 équivalant à un calandrage évitant tout broyage ou endommagement des fibres.

Les avantages de l'injection à froid conformément à l'invention sont multiples et permettent de déboucher sur les marchés demandeurs de grandes pièces à forte cadence de production (automobile, bâtiment, etc...).

Parmi ces avantages on peut citer :

- La diminution importante du prix de revient du matériau composite, élaboré sur son lieu d'utilisation, ce qui autorise le stockage prolongé sans risques des ingrédients de base,

- La suppression du risque de durcissement anarchique du matériau composite en amont du moule,

- La possibilité d'injection par nappe large et à basse pression sans dommage pour les renforts fibreux,

- La diminution importante de la pression d'injection liée à la forte augmentation de la surface du seuil d'entrée du matériau dans le moule, avec pour conséquence la diminution de la résistance mécanique habituellement demandée aux outillages, et de leur coût,

- La diminution des pressions nécessaires à la fermeture du moule,

- L'absence de risques de dommages pour l'unité d'injection en cas d'arrêt volontaire ou non du cycle d'injection,

- L'augmentation des capacités d'injection (volume et surface frontale des pièces),

- L'augmentation des cadences de moulage, cette cadence pouvant approcher le temps d'injection, selon le nombre de moules en service.

**Revendications**

1. Procédé de moulage par injection, à froid, de matériaux composites thermodurcissables, consistant, successivement et sans temps-mort entre les différentes phases, à introduire et malaxer les divers constituants du matériau à injecter, à introduire le mélange obtenu, dès la fin du malaxage et directement, de la zone de malaxage (1, 21) dans l'unité d'injection (4, 26), puis à injecter ledit mélange, à la température à laquelle il se trouve, dans un moule chauffé (17, 32) par l'intermédiaire d'une filière (13, 31), caractérisé en ce que la filière est de section allongée et de relativement faible hauteur de façon à délivrer dans le plan de joint du moule une nappe ayant une épaisseur et une largeur atteignant celles de la pièce à mouler et en ce qu'en fin d'injection la nappe de matière est sectionnée au droit de la filière et au droit de l'orifice d'injection dans le moule.

2. Procédé suivant la revendication 1, caractérisé en ce que le malaxage est opéré en deux temps, le premier consistant à approvisionner en composants primaires et à pré-malaxer ceux-ci, à froid, et le second consistant à transférer lesdits composants pré-malaxés dans une zone (3) formant sas intermédiaire entre la zone de pré-malaxage (2) et l'orifice de chargement de l'unité d'injection (4), le matériau étant soumis en permanence à un malaxage, à froid, dans ladite zone sas (3).

3. Dispositif pour la mise en œuvre du procédé de moulage par injection, à froid, de matériaux composites thermodurcissables suivant la revendication 1 ou 2, comprenant une unité d'injection (4, 26) de matériau composite thermodurcissable, une unité (1, 21) de malaxage dudit matériau dont l'orifice de délivrance du matériau malaxé est relié directement à l'orifice d'alimentation de l'unité d'injection, et une filière (13, 31) d'injection du matériau dans la cavité d'un moule chauffé (17, 32), caractérisé en ce que la filière (13, 31) est conformée de manière à délivrer au droit de l'orifice de ladite cavité dans le plan de joint du moule, une nappe de matière de forme allongée dont l'épaisseur et la largeur sont égales à celles de la pièce à mouler, la filière (13, 31) et le moule (17, 32) étant munis de lames-guillotines (15, 18 ; 34, 37) de sectionnement de ladite nappe en fin d'injection.

4. Dispositif suivant la revendication 3, caractérisé en ce que l'unité de malaxage (1) comprend deux étages (2, 3) superposés, séparables par une cloison escamotable (9), le premier étage ou étage supérieur (2) étant muni de moyens (5, 6, 7) d'amenée des composants et de moyens (8) de malaxage, cependant que l'étage inférieur (3) communique directement avec l'orifice d'alimentation de l'unité d'injection (4) et est également muni de moyens (8) de malaxage.

5. Dispositif suivant la revendication 3, caractérisé en ce que l'unité de malaxage comprend une enceinte (21) dont le fond comporte des parties cylindriques contre lesquelles roulent des rouleaux malaxeurs (23) entraînés en rotation à l'intérieur de ladite enceinte, un orifice d'évacuation étant prévu dans le fond de l'enceinte et faisant communiquer celle-ci avec l'unité d'injection (26) par l'intermédiaire d'un organe d'obturation mobile (27).

6. Dispositif suivant les revendications 3 et 5, caractérisé en ce que l'unité d'injection est un cylindre (26) communiquant avec ladite enceinte (21) par un orifice (22) obturable par un fourreau (27) mobile dans ledit cylindre (26), un piston d'injection (28) étant monté mobile intérieurement au cylindre (26) et au fourreau (27) et en ce que ledit cylindre (26) de l'unité d'injection est muni à une extrémité d'une filière d'injection (31) avec sa lame-guillotine (34), l'ensemble cylindre (26) - enceinte de malaxage (21) - filière (31) étant montée mobile relativement au moule (32).

**Claims**

1. Process for cold injection moulding of composite, thermosetting materials, consisting, in succession and without lost time between the different stages, of introducing and mixing the various constituents of the material to be injected, of introducing the mixture obtained, immediately at the end of mixing and directly, from the mixing zone (1, 21) into the injection unit (4, 26), then of injecting the said mixture, at the temperature at which it is found, into a heated mould (17, 32) through the intermediary of a die (13, 31), characterised in that the die has an elongated section and is of relatively small height in order to discharge in the joining plane of the mould, a sheet having a thickness and width approaching those of the part to be moulded and in that at the end of the injection, the sheet of material is cut opposite the die and opposite the injection orifice into the mould.

2. Process according to Claim 1, characterised in that the mixing is carried out in two stages, the first consisting of supplying primary components and of pre-mixing the latter cold and the second consisting of transferring the said pre-mixed components into an area (3) forming an intermediate lock chamber between the pre-mixing area (2) and the filling orifice of the injection unit (4), the material being permanently subject to cold mixing in the said lock chamber area (3).

3. Device for carrying out the process for the cold injection moulding of composite, thermosetting materials according to Claim 1 or 2, comprising a unit (4, 26) for the injection of composite, thermosetting material, a unit (1, 21) for mixing the said material, whereof the orifice for the discharge of the mixed material is connected directly to the supply orifice of the injection unit and a die (13, 31) for injecting the material into the cavity of a heated mould (17, 32), characterised in that the die (13, 31) is shaped in order to discharge opposite the orifice of the said cavity in the joining plane of the mould, a sheet of material of elongated shape, whereof the thickness and the width are equal to those of the part to be moulded, the die (13, 31) and the mould (17, 32) being provided with guillotine blades (15, 18 ; 34, 37) for cutting off the said sheet at the end of the injection.

4. Device according to Claim 3, characterised in that the mixing unit (1) comprises two superimposed stages (2, 3), which can be separated by a retractable partition (9), the first stage or upper stage (2) being provided with means (5, 6, 7) for supplying constituents and mixing means (8), whereas the lower stage (3) is connected directly to the supply orifice of the injection unit (4) and is also provided with mixing means (8).

5. Device according to Claim 3, characterised in that the mixing unit comprises a vessel (21) whereof the base comprises cylindrical parts against which roll mixing rollers (23) set in rotation inside the said vessel, a discharge orifice being provided in the bottom of the vessel and connecting the latter to the injection unit (26) through the intermediary of a movable closure member (27).

6. Device according to Claims 3 and 5, characterised in that the injection unit is a cylinder (26) connected to the said vessel (21) by an orifice (22) which can be closed off by a sleeve (27) able to move in the said cylinder (26), an injection piston (28) being mounted to move inside the cylinder (26) and the sleeve (27) and in that the said cylinder (26) of the injection unit is provided at one end with an injection die (31) with its guillotine blade (34), the arrangement consisting of the cylinder (26) - mixing vessel (21) - die (31) being mounted to move relative to the mould (32).

**Patentansprüche**

1. Verfahren zum Kaltspritzgießen von wärmehärtbaren Verbundwerkstoffen, das nacheinander und ohne Totzeit zwischen den verschiedenen Schritten darin besteht, die verschiedenartigen Bestandteile des zu spritzenden Werkstoffs einzuführen und zu verkneten, das erhaltene Gemisch am Ende des Verknetens und direkt von der Knetzone (1, 21) in die Spritzeinheit (4, 26) einzuführen, dann dieses Gemisch bei der Temperatur, auf der es sich befindet, in eine geheizte Form (17, 32) mittels eines Spritzmundstücks (13, 31) einzuspritzen, dadurch gekennzeichnet, daß das Spritzmundstück von länglichem Querschnitt und relativ geringer Höhe derart ist, um in der Formteilebene eine Bahn mit einer diejenigen des zu gießenden Werkstücks erreichenden Dicke und Breite zu liefern, und daß am Einspritzende die Werkstoffbahn auf Höhe des Spritzmundstücks und auf Höhe der Einspritzöffnung in der Form durchgetrennt wird.

2. Verfahren nach dem Anspruch 1, dadurch gekennzeichnet, daß das Durchkneten in zwei Zeiten durchgeführt wird, wobei die erste darin besteht, die primären Bestandteile einzuführen und sie kalt vorzuverkneten, und die zweite darin besteht, diese vorverkneteten Bestandteile in eine Zone (3) zu fördern, die eine Zwischenschleuse zwischen der Vorverknetungszone (2) und der Chargieröffnung der Spritzeinheit (4) bildet, wobei der Werkstoff dauernd einer Kaltverknetung in dieser Schleusenzone (3) unterworfen wird.

3. Vorrichtung zur Durchführung des Verfahrens zum Kaltspritzgießen von wärmehärtbaren Verbundwerkstoffen nach dem Anspruch 1 oder 2, die eine Spritzeinheit (4, 26) für wärmehärtbaren Verbundwerkstoff, eine Einheit (1, 21) zum Verkneten dieses Werkstoffs, deren Öffnung zur Abgabe des verkneteten Werkstoffs direkt an die Einspeisungsöffnung der Spritzeinheit angeschlossen ist, und ein Mundstück (13, 31) zum Einspritzen des Werkstoffs in den Hohlraum einer geheizten Form (17, 32) aufweist, dadurch gekennzeichnet, daß das Spritzmundstück (13, 31) derart gestaltet ist, um auf Höhe der Mündung des Hohlraums in der Formteilebene eine Werkstoffbahn von länglicher Form zu liefern, deren Dicke und Breite gleich denen des zu gießenden Werkstücks sind, und daß das Spritzmundstück (13, 31) und die Form (17, 32) mit Schneidblättern (15, 18 ; 34, 37) zum Durchtrennen dieser Bahn an Einspritzende ausgerüstet sind.

4. Vorrichtung nach dem Anspruch 3, dadurch gekennzeichnet, daß die Kneteinheit (1) zwei übereinanderliegende, durch eine einziehbare Wand trennbare Kammern (2, 3) aufweist, wobei die erste Kammer oder obere Kammer (2) mit Mitteln (5, 6, 7) zum Zuführen der Bestandteile und Mitteln (8) zum Verkneten ausgerüstet ist, während die untere Kammer (3) direkt mit der Einspeisungsöffnung der Spritzeinheit (4) verbunden und ebenfalls mit Mitteln (8) zum Verkneten ausgerüstet ist.

5. Vorrichtung nach dem Anspruch 3, dadurch gekennzeichnet, daß die Kneteinheit ein Gehäuse (21) aufweist, dessen Boden zylindrische Teile hat, auf denen die im Inneren des Gehäuses in Rotation versetzten Knetwalzen (23) rollen, und eine Entleerungsöffnung im Boden des Gehäuses vorgesehen ist und dieses mittels eines beweglichen Verschlußorgans (27) mit der Spritzeinheit (26) in Verbindung bringt.

6. Vorrichtung nach den Ansprüchen 3 und 5, dadurch gekennzeichnet, daß die Spritzeinheit ein Zylinder (26) ist, der mit dem Gehäuse (21) durch eine Öffnung (22) verbunden ist, die durch eine im Zylinder (26) bewegliche Hülse (27) verschließbar ist, wobei ein Spritzkolben (28) beweglich innerhalb des Zylinders (26) und der Hülse (27) montiert ist, und daß der Zylinder (26) der Spritzeinheit an einem Ende mit einem Spritzmundstück (31) mit seinem Schneidblatt (34) ausgerüstet ist, wobei die Gruppe Zylinder (26) - Knetgehäuse (21) - Mundstück (31) relativ zur Form (32) beweglich montiert ist.

fig. 1

fig. 2

FIG. 3.

21  23 25  24  22   25 24  23   21

FIG 4